# EUROPEAN PATENT APPLICATION

(11) **EP 0 992 873 A2**
(43) Date of publication of application: **12.04.2000**
(21) Application number: 99307937.5
(22) Date of filing: 08.10.1999
(51) Int. Cl.: G06F 1/00, G06F 12/14

(54) **Access-right setting system and storage medium**

(30) Priority: 09.10.1998 JP 28810698
(71) Applicant: KABUSHIKI KAISHA TOSHIBA, Kawasaki-shi, Kanagawa-ken 210-8572 (JP)
(72) Inventor: Hashimoto, Keisuke, Kabushiki Kaisha, IP Division, Tokyo 105-8001 (JP); Hasegawa, Yoshiaki, Kabushiki Kaisha, IP Division, Tokyo 105-8001 (JP)
(74) Representative: Weitzel, David Stanley

(57) **Abstract**

An access-right setting system for setting right to access resources on a computer, comprises an access-right setting pattern storage section (24) for storing one or more types of access-right setting patterns in which at least an object to obtain permission to access the resources is written, and a selecting section (21) for selecting any one of the access-right setting patterns to set the right to access.

## Description

This invention relates to an access-right setting system and a storage medium, and more particularly to an access-right setting system and a storage medium which are suitable for setting access-rights to resources on the computers distributed over departments or sites.

In recent years, computers have been connected to each other to form a network, making it easy for one computer to access another or enabling more than one person to use a single computer. Accordingly, it is getting more important to manage access to resources (including files on a file system, WWW contents on a WWW server, and various devices) in computers.

To set access-rights to resources on such computers, it is necessary to set authority to each of the servers or OS (operating system) that manage the resources. The setting is generally done by logging in a computer to which authority is to be set and doing setting work.

Specifically, access-right information (hereinafter, also referred to as ACL (access control list)) is set to each server as follows: for example, "permit user 1 to read and write and user 2, user 3, and user 4 to only read."

Many pieces of the set access-right information fit the following fixed pattern: for example, "permit the system manager to read and write but ordinary users to only read."

An actual user corresponding to "system manager" or "ordinary user" differs from department to department or from site to site. For example, it follows that in department A , "system manager = user a, ordinary user = user b, user c, user d" and that in department B, "system manager = user α, ordinary user = user β, user γ.

In a conventional access-right setting method, since members differ from department to department, access-rights have to be set, one by one, to resources to which access-rights are to be set.

In the above example, the access-right that "permit user a to read and write and user b, user c, user d to only read" is set to the resources on the computers department A has. In addition, the access-right that "permit user α to read and write and user β, user γ to only read" is set to the resources on the computers department B has.

As described above, although the pattern of the access-right information to be set is the same, authority actually has to be set according to a different piece of access-right information. This makes it difficult to ease the burden on the access-right setter.

In a distributed system where computers distributed over departments or sites cooperate with one another to carry out processes, the job of setting access-rights to the resources on each computer for access control imposes a severe burden on the access-right setter. It is because the access-right setter has to log in the individual computers one by one each time he or she does the setting and then set separate access-rights on the logged-in computer.

An object of the present invention is to provide an access-right setting system and a computer-readable medium which enable access-rights to be set to resources efficiently, irrespective of departments or sites, and further ease the burden of setting and avoid errors in the setting.

Another object of the present invention is to provide an access-right setting system and a computer-readable medium which enable access-rights to be set without logging in a computer to which access-rights are to be set, each time setting is done, and further ease the burden of setting and avoid errors in the setting.

According to a first aspect of the present invention, there is provided an access-right setting system for setting right to access resources on a computer, comprising: an access-right setting pattern storage section for storing one or more types of access-right setting patterns in which at least an object to obtain permission to access the resources is written; and a selecting section for selecting any one of the access-right setting patterns to set the right to access.

Use of the access-right setting patterns enables access-rights to be set resources efficiently, regardless of departments and sites. Since the patterns have been prepared beforehand, the setter need not fill in the access control list one by one, facilitating the setting of access-rights more, which eases the burden on the setter.

It is preferable that the access-right setting pattern storage section should store access-right setting patterns in which the object to obtain the permission is written in abstract user name. In addition, it is desirable that the access-right setting pattern storage section should store not only the object but also access-right setting patterns in which the contents of the right to access are written. Furthermore, the access-right setting system preferably further comprises an access control list creating section which creates an access control list used to set the right to access by adapting a user-group name corresponding to an actual user name correlated with an abstract user name to the abstract user name in the access-right setting pattern selected by the selecting section.

Therefore, when post names in a department are caused to correspond to, for example, abstract user names in the access control list, this facilitates the setting of access-rights much more. The larger the number of resources to which access-rights are set, the more the burden on the setter is reduced. Moreover, since user-group names are adapted in creating an access control list, the contents of the access-right setting can be changed without recreating an access control list, even when members in the group have been changed as a result of personal changes.

According to a second aspect of the present invention, there is provided a computer program stored on a computer-readable medium used to control an access-right setting system for setting right to access resources on a computer, the computer program comprising: a code of access-right setting pattern managing means for causing a storage unit to store one or more types of access-right setting patterns in which at least an object to obtain permission to access the resources is written; and a code of selecting means for causing the access-right setting pattern managing means to select any one of the access-right setting patterns to set the right to access.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing the configuration of a computer system to which an access-right setting system according to a first embodiment of the present invention is applied;
FIG. 2 is a block diagram showing the functional configuration of the access-right setting system in the first embodiment;
FIG. 3 shows an example of an access-right setting pattern group;
FIG. 4 shows an example of user information on a department (department A);
FIG. 5 shows an example of user information on another department (department B);
FIGS. 6A, 6B, and 6C show examples of ACL created by the ACL converting section;
FIG. 7 is a flowchart for the operation of the access-right setting system in the first embodiment;
FIG. 8 is a block diagram showing the functional configuration of an access-right setting system according to a second embodiment of the present invention;
FIG. 9 is a flowchart for the operation of the access-right setting system in the second embodiment;
FIG. 10 is a block diagram showing the functional configuration of an access-right setting system according to a third embodiment of the present invention;
FIG. 11 is a block diagram showing the functional configuration of an access-right setting system according to a fourth embodiment of the present invention;
FIG. 12 shows examples of a ACL file created by the ACL converting section in the fourth embodiment;
FIG. 13 is a block diagram showing the functional configuration of an access-right setting system according to a fifth embodiment of the present invention;
FIG. 14 is a block diagram showing the configuration of an access-right setting pattern editing function applied to an access-right setting system according to a sixth embodiment of the present invention;
FIG. 15 is a block diagram showing an example of a network system to which an access-right setting system according to a seventh embodiment of the present invention is applied;
FIG. 16 shows an example of an access-right setting pattern group in the seventh embodiment;
FIG. 17 shows an example of user information on a sports department; and
FIG. 18 shows an example of user information of a movie department.

Hereinafter, referring to the accompanying drawings, embodiments of the present invention will be explained.

### (First Embodiment)

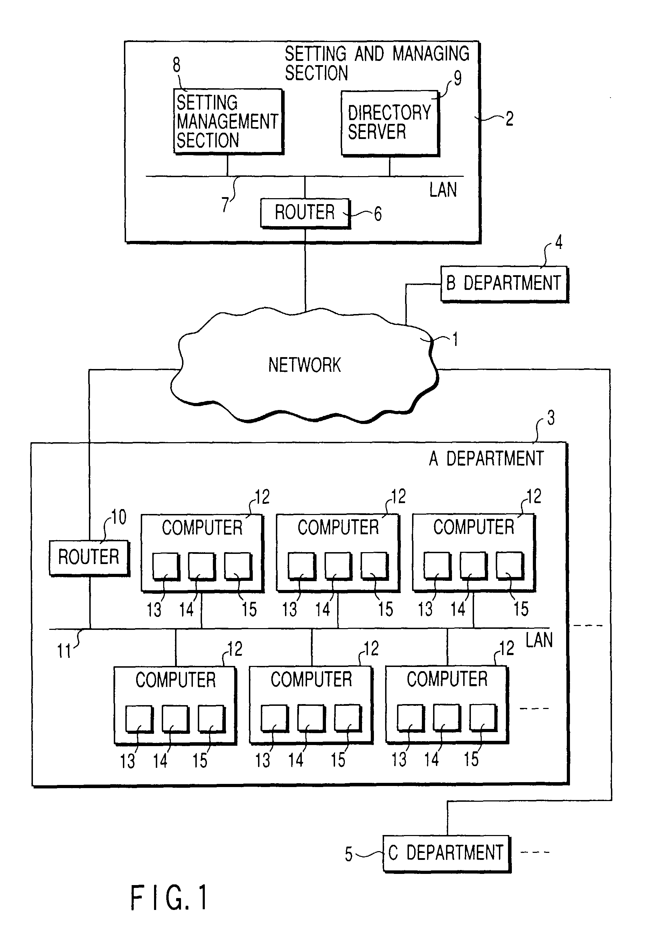

FIG. 1 is a block diagram showing the configuration of a computer system to which an access-right setting system according to a first embodiment of the present invention is applied.

The computer system is composed of LANs in a setting and managing department 2, an A department 3, a B department 4, a C department 5, ··· connected to each other via a network 1.

The LAN of the setting and managing department 2 is connected via a router 6 to the network 1 and has a setting management server 8 and a directory server 9 connected to its data transmission line 7. The setting and managing department 2 is a department for setting and managing access-rights.

Of the departments 3, 4, 5, ···, for example, the LAN of the A department 3 is connected via a router 10 to the network 1 and has computers 12 connected to its data transmission line 11. Each of the computers 12 connected to the LAN is provided with a WWW server 13, a contents information transmitting section 14, and an ACL setting section 15. In the first embodiment, the resources on each computer 12 in each of the departments 3, 4, 5, ··· are objects to which access-rights are to be set.

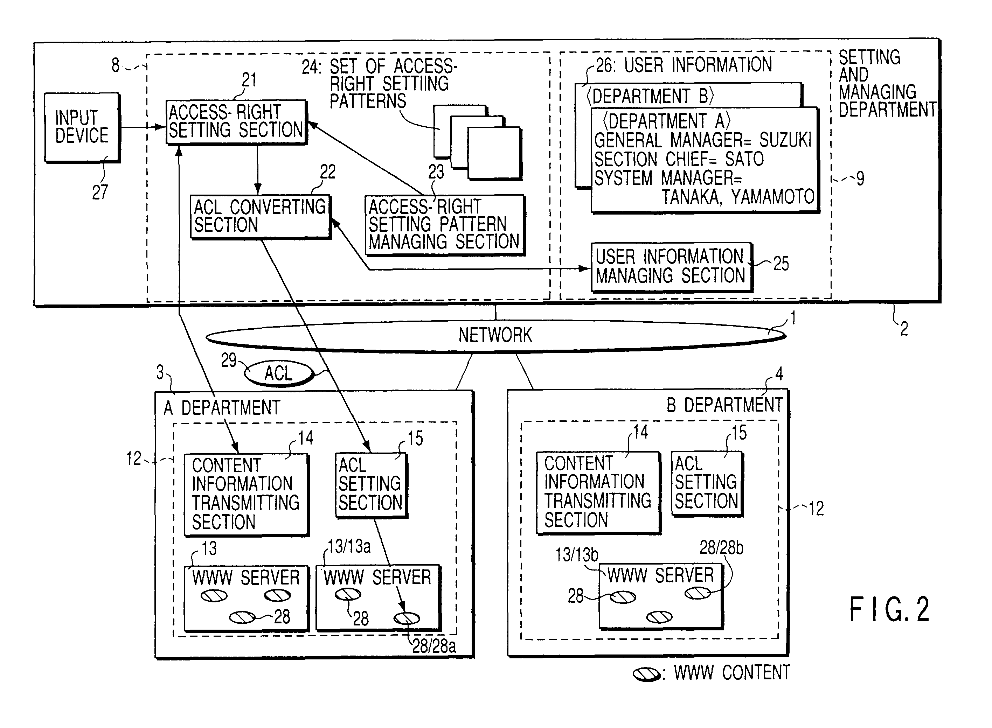

FIG. 2 is a block diagram showing the functional configuration of the access-right setting system in the first embodiment.

The access-right setting system mainly comprises an access-right setting section 21, an ACL converting section 22, an access-right setting pattern managing section 23, a set 24 including access-right setting patterns stored in a memory unit (not shown), a user information managing section 25, and user information 26 stored in a memory unit (not shown) which are provided in the setting and managing department 2, and a contents information transmitting section 14 and an ACL setting section 15 which are provided on the commuter 12 in each department.

In the above configuration of the setting and managing department 2, the setting management server 8 includes the access-right setting section 21, ACL converting section 22, access-right setting pattern managing section 23, and set 24 of access-right setting patterns. The directory server 9 includes the user information managing section 25 and user information 26. As long as each of these sections are placed in the setting and managing section 2, they may be provided on the same computer or distributed over many computers.

The access-right setting section 21 accepts the input by the access-right setter from an input device 27 and enables the setting and managing department 2 to set access-rights to the WWW server 13 on the computer 12 in each department 3.

To do this, the access-right setting section 21 receives content information from the contents information transmitting section 14 on the computer 12 and acquires an access-right setting pattern from the set 24 of access-right setting patterns via the access-right setting pattern managing section 23. Then, the access-right setting section 21 gives the acquired setting pattern and right setting target information to the ACL converting section 22 and asks the ACL converting section 22 to create ACL.

The access-right setting pattern managing section 23 manages the set 24 of access-right setting patterns and registers, retrieves, or deletes an access-right setting pattern according to the request of the access-right setting section 21.

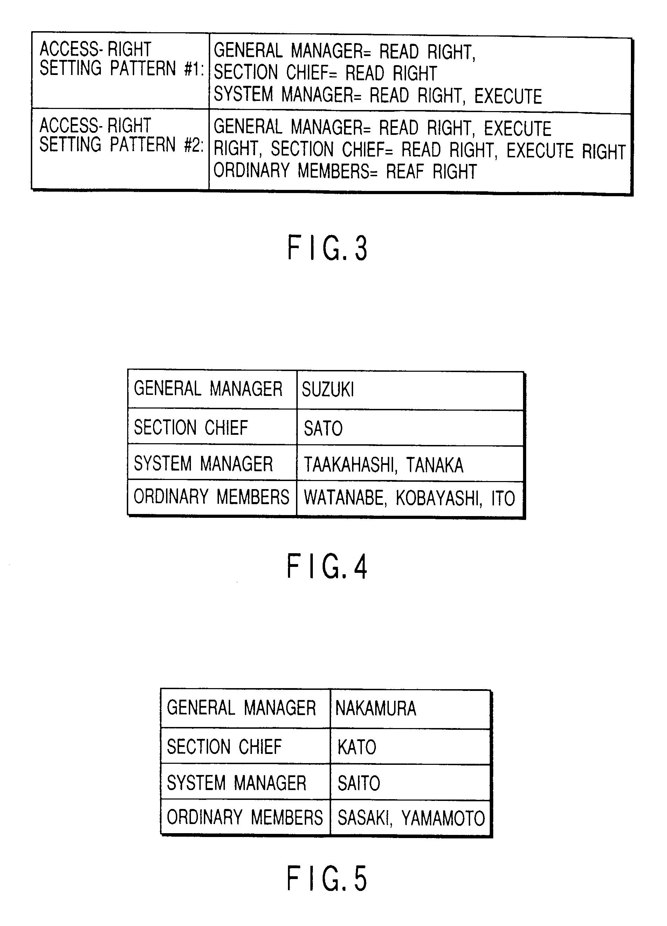

The set 24 of includes access-right setting patterns, as shown in FIG. 3.

FIG. 3 is a table showing an example of an access-right setting pattern group.

FIG. 3 shows two setting patterns. Pattern #1 is the pattern of "giving read right to the general manager and section chief and both of read right and execute right to the system manager." Pattern #2 is the pattern of "giving both read right and execute right to the general manager and section chief and only read right to ordinary members."

Here, "GENERAL MANAGER," "SECTION CHIEF," "SYSTEM MANAGER," and "ORDINARY MEMBERS" are abstract user names, not users to which access-rights are actually set. Converting abstract user names into actual user names is done on the basis of the user information 26.

The user information managing section 25 manages the user information 26 and registers, retrieves, or deletes the information. In the first embodiment, the function of the user information managing section 25 is realized by a directory server function complying with LDAP (Lightweight Directory Access Protocol). It may be realized by another method, as long as the method assures a similar function. The directory server is a computer for providing centralized management of personal in a company or a laboratory, using LDAP. In the directory server, the latest information on the departments and on the individuals are constantly updated by another input/output means (not shown).

The user information 26 is such information as corresponds to a table correlating user names (user IDs) with abstract user names (such as posts) and is managed by the directory server.

FIG. 4 shows an example of user information in a certain department (department A).

FIG. 5 shows an example of user information in a certain department (department B).

Next, receiving an ACL creating instruction from the access-right setting section 21, the ACL converting section 22 asks the user information managing section 25 to take out a piece of user information corresponding to the department name acquired from the access-right setting section 21. Then, the ACL converting section 22 adapts the user information to the setting pattern acquired from the access-right setting section 21 and creates access-right information (access control list: ACL) to be actually set in WWW content 28.

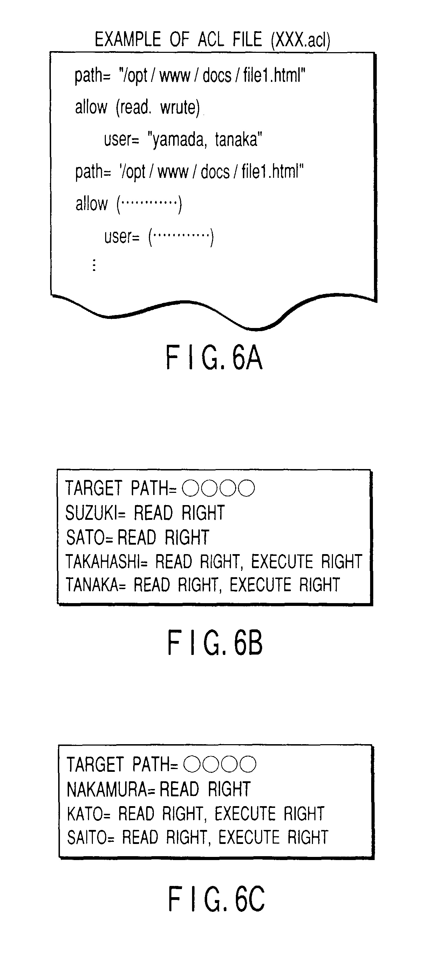

FIGS. 6A, 6B, and 6C show examples of ACL created by the ACL converting section.

FIG. 6A shows a concrete example of the contents of an ACL file. Here, "path" indicates path information on a computer to which access-rights are to be set and "allow" represents the contents of permission, such as read permission, write permission, or execute permission. Additionally, "user" indicates a concrete user name to become an object of a certain "allow."

FIGS. 6B and 6C show examples of the user information of FIGS. 4 and 5 adapted by the ACL converting section 22 to pattern #1 of the set 24 of access-right setting patterns of FIG. 3. The contents shown in FIG. 6B or 6C are converted into the information as shown in FIG. 6A, thereby forming an ACL file.

For example, in FIG. 6B, it is assumed that setting pattern #1 is set in WWW content 28a on the WWW server 13a in the A department 3. Specifically,
for the following access-rights,
   general manager = read right
   section chief = read right
   system manager = read right, execute right,
the ACL converting section 22 effects the following conversion: "general manager → Suzuki," "section chief → Sato," and "system manager → Takahashi, Tanaka," creates an ACL file with the contents shown in FIG. 6B, and transmits the file to the A department. The ACL is set in the WWW content 28a by the ACL setting section 15 on the computer 12, which will be explained later.

Similarly, when setting pattern #1 is set in WWW content 28b on the WWW server 13b in the B department 4, an ACL file with the contents shown in FIG. 6C is created and transmitted to the B department 4.

The component elements provided in each computer 12 to which the ACL file is transmitted will be explained.

The WWW server 13 (including 13a and 13b), which is provided in each computer 12, is server software for the World Wide Web. More than one WWW server 13 may be provided on a single computer 12. Each WWW server 13 has one or more WWW content 28 (including 28a and 28b) as resources. While in the first embodiment, objects to which access-rights are set have been WWW contents on the WWW servers, the objects may be other contents, as long as they are resources (for example, contents on a certain OS) with access-right setting means.

The contents information transmitting section 14 transmits file names, presently set access-rights, and others as content information on the content 28 on the WWW sever 13 specified by the access-right setting section 21.

The ACL setting section 15 sets the access-right information (ACL 29) received from the ACL converting section 22 in the WWW contents to which access-rights are to be set.

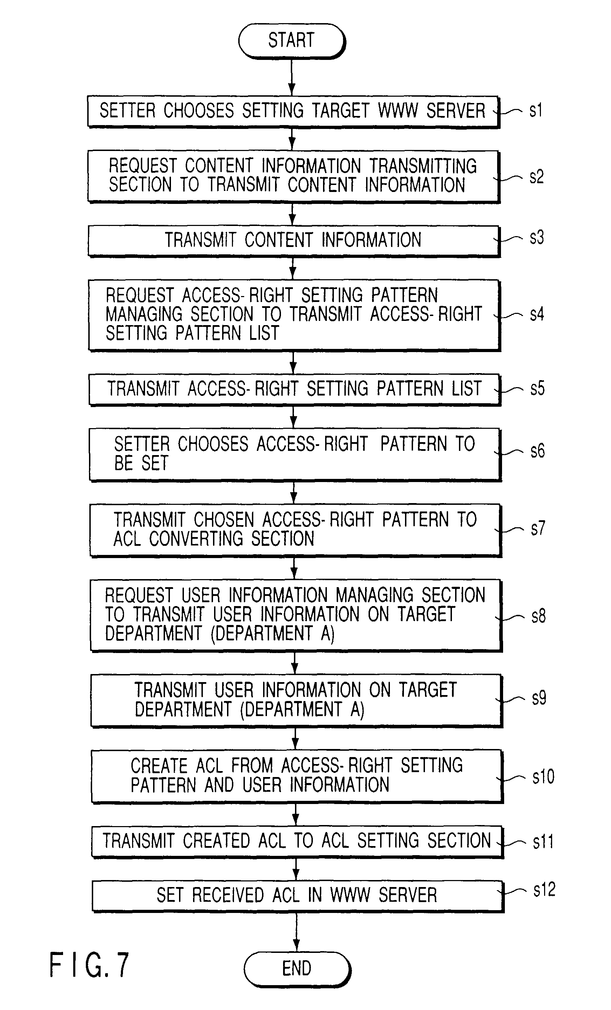

Next, the operation of the access-right setting system in the first embodiment constructed as described above will be explained by reference to FIGS. 2 and 7.

FIG. 7 is a flowchart for the operation of the access-right setting system in the first embodiment.

As shown in FIG. 7, in the setting and managing department 2, the setter enters the necessary data into the access-right setting section 21 to choose to which WWW server 13 access-right should be set (s1). It is assumed that the WWW server 13a in the A department 3 has been chosen.

Next, the access-right setting section 21 instructs the contents information transmitting section 14 in the A department 3 to transmit content information on the chosen WWW server 13a (s2).

Receiving the instruction, the contents information transmitting section 14 acquires the content information on the WWW server 13a and transmits the information to the access-right setting section 21 (s3).

Receiving the content information, the access-right setting section 21 instructs the access-right setting pattern managing section 23 to transmit an access-right setting pattern list (s4).

The access-right setting pattern managing section 23 reads the set 24 of access-right setting patterns and transmits it to the access-right setting section 21 (s5).

The access-right setting pattern list is displayed on a display device (not shown). While checking the display, the setter chooses the content 28a to which an access-right is to be set and the access-right setting pattern to be set to the contents and enters the chosen pieces of information to the access-right setting section 21 (s6).

The access-right setting section 21 transmits the pieces information chosen at step s6 to the ACL converting section 22 (s7). Information on the chosen contents includes information on which department the setting target exists.

Because the WWW server 13a to which access-rights are to be set exists in the A department 3, the ACL converting section 22 instructs the user information managing section 25 to transmit user information on the A department 3 (s8).

Receiving the instruction, the user information managing section 25 retrieves user information on the A department 3 from the user information 26 and transmits the retrieved information to the ACL converting section 22 (s9).

Next, the ACL converting section 22 applies the received user information to the abstract user name in the access-right setting pattern, thereby creating an actual ACL (see FIG. 6A) to be set in the WWW contents 13a (s10). As described above, creating the ACL is effected by substituting the user information into the access-right setting pattern. The created ACL includes information (e.g., pattern number) to decide which access-right setting pattern has been chosen, in the form of comments on ACL or the like.

The ACL created at step s10 follows the format that can be used at the WWW server 13a to which access-rights are to be set. Although the ACL format differs from one WWW server product to another, the ACL converting section 22 holds each piece of format information and creates ACL according to each WWW server 13.

Next, the ACL converting section 22 transmits the created ACL 29 via the network 1 to the ACL setting section 15 in the computer 12 in the A department 3 (s11).

The ACL setting section 15 sets the ACL 29 transmitted to the computer 12 in the content 28a of the target WWW server 13a (s12).

As described above, the ACL has been set in the content 28. After the ACL has been set, accessing the content 28 (for example, content 28a) is effected as follows. Here, it is assumed that attribute information (including user names and passwords) on the individual users has been registered in the directory server 9.

When a user attempts to access the content 28a in the WWW server 13a, the WWW server 13a requests the user to enter the user name and password. When receiving the user name and password, the WWW server 13a asks the directory server 9 about user information on the user and checks whether the set of the user name and password entered by the user coincides with what has been registered properly (this process is generally known as user authentication). When it has been verified that the set has been registered properly, the WWW server 13a then compares the user name with the name of the authorized person set in the ACL. If there is the authorized person's name coinciding with the user name, the WWW server 13a permits the user to access the content 28a according to the rights set in the ACL.

The access-right setting system according to the first embodiment produces the following effects.

First, because the ACL converting section 22 creates an ACL automatically on the basis of the information from the access-right setting section 21, the user can set an ACL by just choosing an access-right setting pattern, which alleviates the trouble of setting an ACL. Especially because the setter need not write an ACL each time he or she sets the contents of access-rights, this prevents inadequate setting due to errors in description.

Since each pattern in the set 24 of access-right setting patterns is written using abstract user names, the same access-right setting pattern can be used for departments or sites to which different users belong. As a result, the number of access-right patterns the entire system needs is decreased remarkably, reducing the management cost, which therefore reduces the access-right setting cost.

Each process in the first embodiment is completed with the setting of access-rights. This prevents an additional process from being performed in accessing contents on the WWW server, leading to no deterioration of performance during execution (in operation: in accessing resources).

Use of the mechanism for transferring from the ACL converting section 22 to the computer 12 in each department enables one place (e.g., the setting and managing department 2) to centrally set access-rights to contents on the WWW servers 13 distributed over the network 1. This alleviates the access-right setter's trouble of logging in the computer 12 to which access-rights are to be set each time setting is done. To realize this process, there is no need to make modifications or additions to the access-right checking mechanism of the WWW servers during execution (in accessing contents).

Since all the user information is managed by the directory server 9, even when modifications are made to the user information as a result of personnel changes, the change of the user information is reflected easily by just reconverting the ACL on the basis of information (e.g., pattern number) on the access-right setting pattern added to the ACL. The access-right setting section 21 is designed to be able to choose reconversion. When reconversion is selected, the access-right setting section 21 instructs the contents information transmitting section 14 to include information on the pattern into the content information. Then, on the basis of information on the pattern, the access-right setting section 21 automatically acquires information to be given to the ACL converting section 22 and gives an instruction to create an ACL.

### (Second Embodiment)

While in the first embodiment, the setting and managing department side has converted an ACL pattern into an ACL and then distributed the ACL to WWW servers, the WWW server side converts an ACL pattern into an ACL in a second embodiment of the present invention.

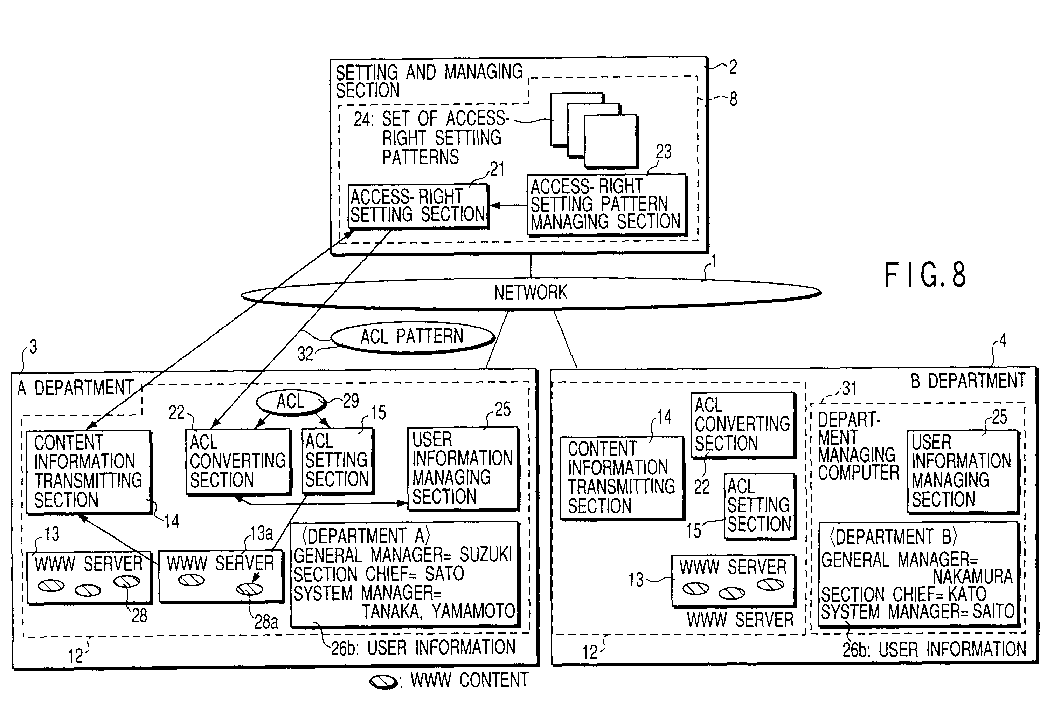

FIG. 8 is a block diagram showing the functional configuration of an access-right setting system according to a second embodiment of the present invention. In FIG. 8, the same parts as those in FIG. 2 are indicated by the same reference symbols and explanation of them will be omitted. Only the parts different from those in FIG. 2 will be explained.

The access-right setting system has the same configuration as that of the first embodiment except that the user information managing section 25, pieces of user information 26a, 26b, ··· and the ACL converting section 22 are provided in each of the departments 3, 4, ···.

The pieces of user information 26a, 26b, ··· are pieces of information on the departments 3, 4, ···, respectively. The pieces of user information and user information managing section 25 are provided in each computer 12 in a department LAN or in the server computer (department managing computer 31) that manages information on the department and carries out various processes. In either case, the ACL converting section 22 is designed to be able to ask the user information managing section 25 to acquire the user information.

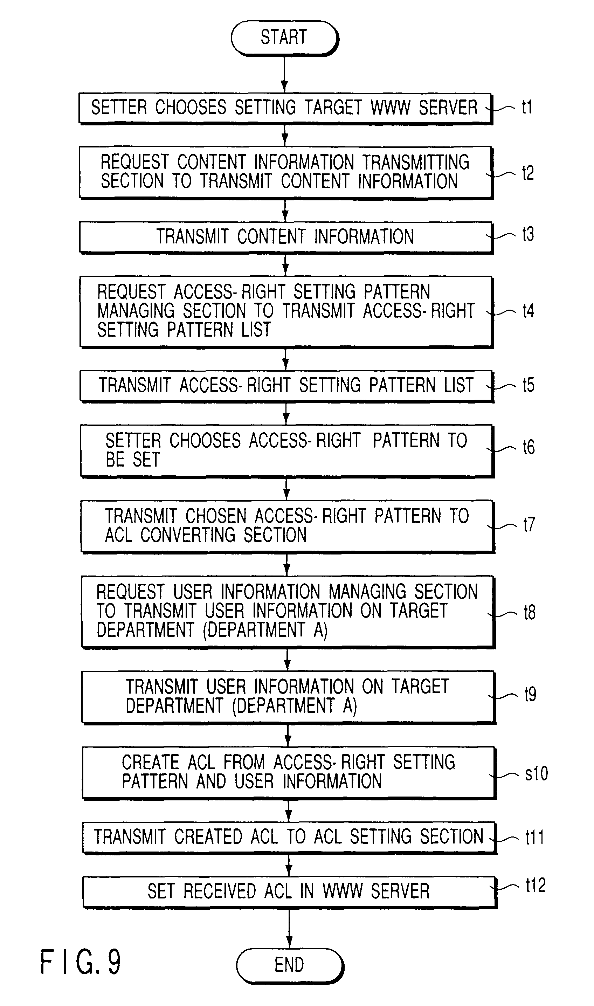

The operation of the access-right setting system of the second embodiment constructed as described above will be explained by reference to FIGS. 8 and 9.

FIG. 9 is a flowchart for the operation of the access-right setting system of the second embodiment.

Of the processes shown in FIG. 9, those at step t1 to step t6 are the same as those at step s1 to step s6 in FIG. 7 of the first embodiment, and therefore explanation of them will be omitted. In the second embodiment, a case where access-rights are set to content 28a in the WWW server 13a into the A department 3 will be explained.

When the setter has entered the data to the access-right setting section 21 (t6), the access-right setting section 21 of the setting management server 8 transmits information to specify the content 28a to which access-rights are to be set and information (ACL pattern 32) on an access-right setting pattern to be set for the contents to the ACL converting section 15 on the computer 12 in the A department 3 via the network 15 (t7).

Receiving the ACL pattern 32, the ACL converting section 22 instructs the user information managing section 25 in the A department 3 to transmit the user information on the A department 3 (t8).

Receiving the instruction, the user information managing section 25 acquires the user information and further creates an ACL 29 on the basis of the user information and setting pattern in the same manner as at steps s8, s9, and s10 of FIG. 7 in the first embodiment (FIG. 9: t8, t9, and t10).

The ACL 29 created by the ACL converting section 22 in the A department is transmitted to the ACL setting section 15 in the A department 3 (t11).

Receiving the ACL 29, the ACL setting section 15 sets the ACL 29 in the content 28a on the WWW server 13a as in the first embodiment (t12).

The way of accessing the content 28 to which the ACL has been set as described above is the same as in the first embodiment. A concrete explanation of it will be omitted.

The access-right setting system of the second embodiment produces not only a similar effect to that in the first embodiment but also the following effects.

Since the data transmitted via the network 1 is only the ACL pattern 32 (setting pattern information and content specifying information), the amount of data transmitted is reduced as compared with the first embodiment.

Furthermore, carrying out the conversion into the ACL 29 on each WWW server 13 side enables the burden of ACL converting work to be distributed, as compared with the first embodiment.

### (Third Embodiment)

While in the second embodiment, the user information managing section and user information have been provided in each department, the ACL converting section is provided in each department and the user information managing section and user information are provided collectively in the setting and managing department 2 in a third embodiment of the present invention.

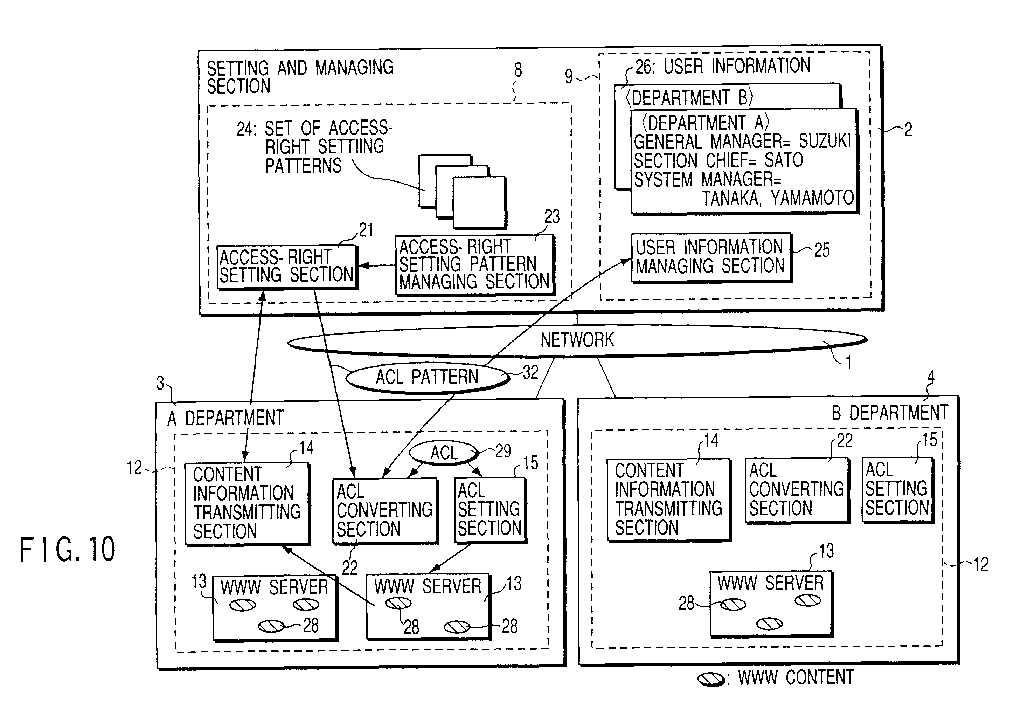

FIG. 10 is a block diagram showing the functional configuration of an access-right setting system according to the third embodiment of the present invention. In FIG. 10, the same parts as those in FIGS. 2 and 8 are indicated by the same reference symbols and explanation of them will be omitted. Only the parts different from those in FIGS. 2 and 8 will be explained.

The access-right setting system has the same configuration as that of the second embodiment except that the user information managing section 25 and user information 26 are provided in the directory server 9 in the setting and managing department 2 as in the first embodiment.

The access-right setting system of the third embodiment constructed as described above operates similarly to the second embodiment except that the ACL converting section 22 asks the user information managing section 25 in the setting and managing department 2 about the user information in the relevant department via the network 1.

The way of accessing the content 28 to which an ACL has been set as described above is the same as in the first embodiment. A concrete explanation of it will be omitted.

The access-right setting system of the third embodiment produces not only a similar effect to that of the second embodiment but also the following effect. Because the user information 26 is managed collectively in the setting and managing department 2, the cost of installing user information managing resources and the cost of managing the user information in each of the department 3, 4, ··· can be reduced as in the first embodiment.

Although in the third embodiment, there arises an overhead in which the setting and managing department is asked about the user information each time an ACL is created, resulting in an increase in the traffic, such an increase in the traffic is prevented in the first and second embodiment.

### (Fourth Embodiment)

While in the first to third embodiments, the created access-rights have been expressed in the form of an access-right to each user, access-rights are set on a user-group basis, each consisting of a single user or plural users, in a fourth embodiment of the present invention.

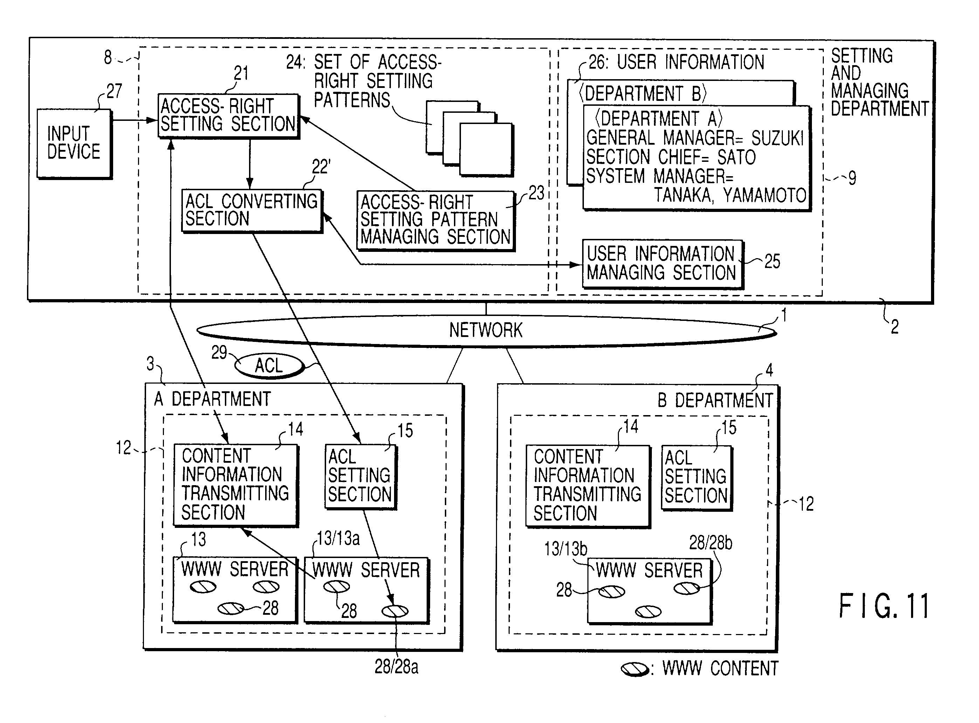

FIG. 11 is a block diagram showing the functional configuration of an access-right setting system according to the fourth embodiment of the present invention. In FIG. 11, the same parts as those in FIG. 2 are indicated by the same reference symbols and explanation of them will be omitted. Only the parts different from those in FIG. 2 will be explained.

The access-right setting system has the same configuration as that of the first embodiment except that the function of the ACL converting section 22' is modified.

The ACL converting section 22' differs from the equivalent in the first embodiment in that it creates such an ACL as uses a user-group consisting of a single or plural users instead of using user names as authorized persons to be set. Although not explained in the first to third embodiments, the user information managing section 25 manages not only user-group names but also information about which user-group which user belongs to.

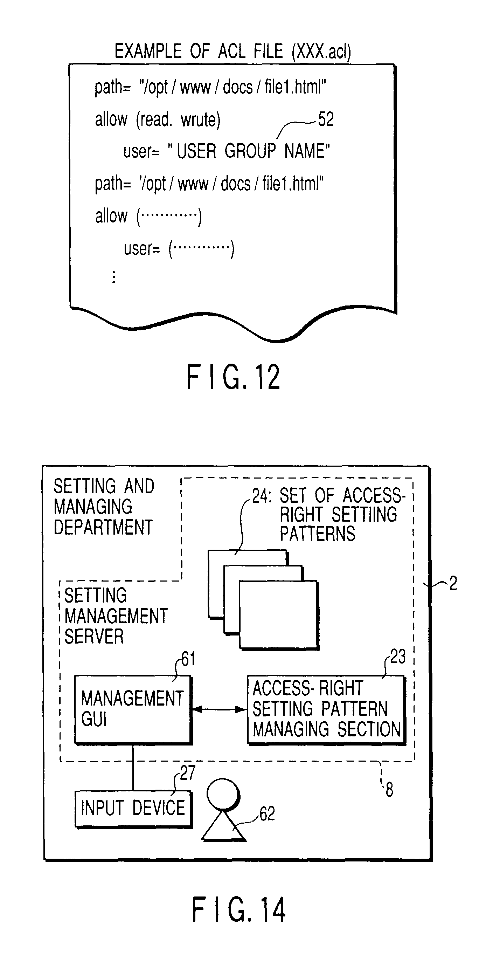

FIG. 12 shows an example of an ACL file created by the ACL converting section in the fourth embodiment. As shown in FIG. 12, a user-group name 52 is written in the field in which a user name should be put in FIG. 6A.

A WWW server 13 in the fourth embodiment provides an ACL setting function or a user-group managing function on a user-group basis.

The operation of the access-right setting system in the fourth embodiment constructed as described above will be explained.

The operation of the fourth embodiment is the same as that of the first embodiment except that ACL setting is done using user-group names.

For example, consider a case where the user information in the A department 3 is as shown in FIG. 4 and access pattern #1 of FIG. 3 is set in the content 28a on the WWW server 13a in the A department 3.

It is assumed that the user information managing section 25 manages the definitions of the following user-groups according to the information shown in FIG. 4:
· "General manager in department A" group = Suzuki belongs to
· "Section chief in department A" group = Sato belongs to
· "System manager in department A" group = Takahashi and Tanaka belong to.

Here, a rule that "a target department name should be added in front of an abstract user name" is employed as a naming rule of user-group names. Another naming rule may be used, provided that information on what naming rule is employed must be shared by the ACL converting section 22' and user information managing section 25.

While in the first embodiment, the ACL converting section 22 develops an abstract user name in the access-right setting pattern into an actual user name, the ACL converting section 22' of the fourth embodiment develops an abstract user name into a user-group name according to the naming rule. Specifically,
the following access-right setting pattern
general manager = read right
section chief = read right
system manager = read right, execute right is converted into the following ACL
general manager in the A department = read right
section chief in the A department = read right
system manager in the A department = read right, execute right.

Similarly, when the same access-right setting pattern #1 is set in the WWW sever 13 in the B department, the access-right setting pattern is converted into the following ACL,
general manager in the B department = read right
section chief in the B department = read right
system manager in the B department = read right, execute right.

The ACL setting section 15 of the computer 12 sets the converted ACL in the content 28a of the WWW server 13a.

The way of accessing the content 28 to which the ACL has been set as described above is basically the same as in the first embodiment. Only the parts differing from the first embodiment will be explained.

When the WWW server 13 checks the authorized persons set in the ACL after having completed the user authentication, the server 13 verifies which user belongs to the user-group because a user-group name has been written in the ACL by asking the directory server 9. For example, a list with the user names "Takahashi, Tanaka" is obtained for the user-group "System manager in department A." It is verified whether the user name (the user attempting to access contents) confirmed as a result of user authentication has been included in the list of user names obtained here. If it has been included, it is verified that the user is an authorized person and the user is permitted to access the content 28 according to the right set in the ACL.

The access-right setting system of the fourth embodiment produces not only a similar effect to that of the first embodiment but also the following effect. Because the access-right setting pattern is developed into a user-group, not an actual user, the change of the user information due to personnel changes can be coped with by just changing the definition of the user-group, which eliminates the work of recreating an ACL.

While in the fourth embodiment, the method of setting an ACL on a user-group basis has been explained in connection with the first embodiment, the method may be applied similarly to the second and third embodiments.

### (Fifth Embodiment)

In the first to fourth embodiments, the method in which the WWW server 13 asks the user information managing section 25 of the directory server 9 to check an actual user name has been explained in connection with the actual access-right setting process (the operation after ACL setting). In contrast, in a fifth embodiment of the present invention, a method of registering attribute information (including user names and passwords) to be checked and user-group information (a list of users belonging to the user-groups) in the WWW server 13 beforehand will be explained.

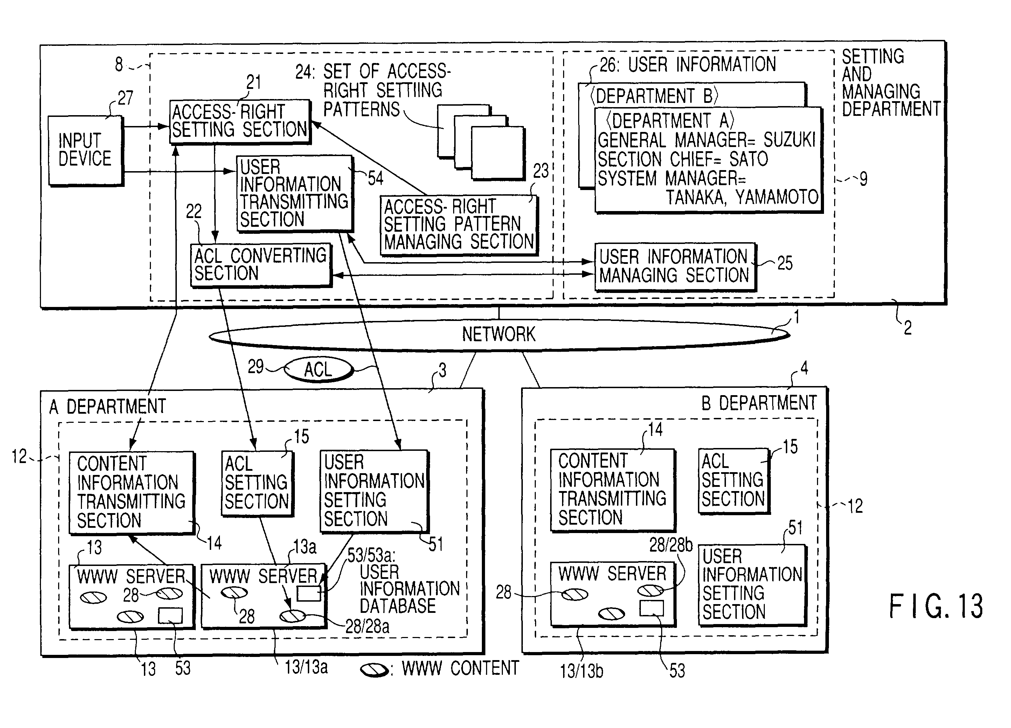

FIG. 13 is a block diagram showing the functional configuration of an access-right setting system according to the fifth embodiment of the present invention. In FIG. 13, the same parts as those in FIG. 2 are indicated by the same reference symbols and explanation of them will be omitted. Only the parts different from those in FIG. 2 will be explained.

The access-right setting system has the same configuration as that of the first embodiment except that the user information transmitting section 54 is provided in the setting management server 8, the user information setting section 51 is provided in each computer 12, and the user information database 53 is provided in the WWW server 13. The user information database 53 is a mechanism an ordinary WWW server has.

The user information transmitting section 54 acquires the attribute information on the users belonging to the department specified at the input device 27 and the user-group information from the user information managing section 25 and transmits the acquire information to the user information setting section 51 via the network 1. The user information setting section 51 registers the information received from the user information transmitting section 54 in the user information database 53.

The operation of the access-right setting system in the fifth embodiment constructed as described above will be explained.

Since the ACL setting process is the same as that in the first embodiment, explanation of it will be omitted.

Using the input device 27 with suitable timing (for example, at any time before ACL setting or immediately after ACL setting), the access-right setter instructs the user information transmitting section 54 to transmit the attribute information on the user and user-group information the target WWW server needs (for example, a rule that information on the users and user-groups belonging to department A should be transmitted to the WWW server in department A has been determined beforehand. Alternatively, the access-right setter has specified the rule).

Receiving the instruction, the user information transmitting section 54 reads the necessary user attribute information and user-group information from the user information managing section 25 and transmits the information to the user information setting section 51 in the target department. The user information setting section 51 stores the received information in the user information database 53 in the target WWW server 13.

Next, the way of accessing the content 28 to which an ACL has been set will be explained.

When a user attempts to access the content 28a of the WWW server 13a, the WWW server 13a requests the user to enter his or her user name and password. When receiving the user name and password, the WWW server 13a asks the user information database 53 provided therein about attribute information on the user and authenticates the user.

The actual user name acquired from the user information database 53a is compared with the ACL. Thereafter, access control is carried out as in the first embodiment.

The access-right setting system of the fifth embodiment not only produces a similar effect to that in the first embodiment but also provides access control by the different method from those of the first to fourth embodiments.

While in the fifth embodiment, the method of acquiring the user attribute information from the user information database 53 has been explained in connection with the first embodiment, the method may be applied similarly to the second to fourth embodiments. To do this, the user information transmitting section 54, user information setting section 51, and user information database 53 have to be provided in each of the second to fourth embodiments.

### (Sixth Embodiment)

While in each of the first to fifth embodiments, the set 24 of access-right setting patterns has been set beforehand, the access-right setting patterns may be created, modified, or deleted. This will be explained in a sixth embodiment of the present invention.

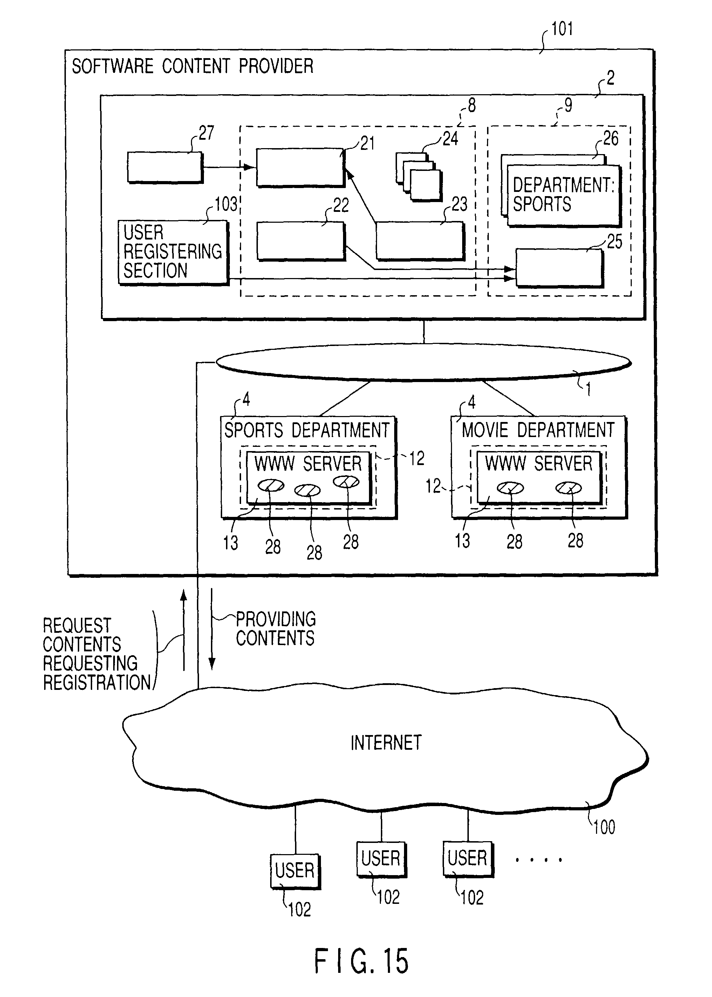

FIG. 14 is a block diagram showing the configuration of an access-right setting pattern editing function applied to an access-right setting system according to the sixth embodiment of the present invention. In FIG. 14, the same parts as those in FIGS. 2 to 13 are indicated by the same reference symbols and explanation of them will be omitted. Only the parts different from those in FIGS. 2 to 13 will be explained.

The access-right setting system is such that an access-right setting pattern management GUI 61 is provided in the setting management server 8 of the access-right setting system in each of the first to fifth embodiments.

The management GUI 61 is designed to receive information from the input device 27 and create, modify, and delete an access-right setting pattern on the basis of the input information by means of the access-right setting pattern managing section 23.

The access-right setting system of the sixth embodiment constructed described above operates similarly to the first to fifth embodiments except for the creation, modification, and deletion of access-right setting patterns. The management GUI 61 operates as follows.

When information on (or the contents of) a new access-right setting pattern is inputted from the input device 27 to the management GUI 61, the GUI 61 adds a new pattern to the set 24 of access-right setting patterns.

The changed contents of the existing access-right setting patterns are displayed via the access-right setting pattern managing section 23 and management GUI 61. Looking at the display, the setter 62 enters the changing data. On the basis of the changing input, the managing GUI 61 changes the contents of the set 24 of access-right setting patterns.

Furthermore, when a delete instruction and the specification of the pattern to be deleted are inputted from the input device 27, the managing GUI 61 deletes the relevant pattern from the set 24 of access-right setting patterns.

The access-right setting system of the sixth embodiment not only produces similar effects to those of the first to fourth embodiments but also facilitates the creation, modification, and deletion of access-right setting patterns, because it includes the access-right setting pattern managing mechanism composed of the management GUI 61, input device 27, and access-right setting managing section 23.

The access-right setting patterns may be managed on a GUI basis or a command basis or in a combination of them.

For example, with the managing GUI 61 and input device 27, various ways of data input may be considered. For instance, the setter 62 may enter data from the keyboard or by clicking the desired object on the display screen with the mouse or entering data from the keyboard.

### (Seventh Embodiment)

In the first to sixth embodiments, a case where the access-right setting system manages the contents in each department in an in-house LAN system has been explained. The access-right setting systems in the first to sixth embodiments may be applied to various cases where access-rights have to be set to contents. In a seventh embodiment of the present invention, a system which provides registered users with software and contents via the Internet will be explained.

FIG. 15 is a block diagram of a network system to which an access-right setting system according to the seventh embodiment of the present invention is applied. In FIG. 15, the same parts as those in FIGS. 2 to 14 are indicated by the same reference symbols and explanation of them will be omitted. Only the parts different from those in FIGS. 2 to 14 will be explained.

The network system is such that the computer system 101 of a software provider (hereinafter, referred to as the software content provider 101) and a large number of user terminals 102 are connected to the Internet 100.

In the computer system 101 of the software content provider, various types of servers (not shown) for connecting with the Internet and a user registering section 103 are provided as shown in FIG. 1. Although FIG. 15 shows a case corresponding to the first embodiment, the seventh embodiment may, of course, be applied to any of the second to sixth embodiments. Specifically, the computer system 101 of the software content provider has the same configuration as that of the system in each of the first to sixth embodiments except that the user registering section 103 and others are added.

The user registering section 103 registers users requesting registration by mail or via the Internet 100 in the user information 26. The user registering section 103 may be provided in an independent computer connected to the LAN in the setting and managing section 2 or in the directory server 9.

After the users registered in the user information 26 have been assigned rights to access the content 28, they are allowed to access the content 28 registered in the WWW server 13 in each of the departments 3, 4, ··· in the range of access-rights assigned to them. The accessing is done from the user terminal 102 via the Internet 100.

In the seventh embodiment, because information on movies or sports and software contents, including game programs, are provided for users, the departments 3, 4, ··· include a sports department, a movie department 4, ···. The WWW server 13 in the sports department 3 registers sports-related information as content 28. The WWW server 13 in the movie department 4 registers movies as content 28.

According to the organization of departments, the user information 26 registered in the directory server 9 is organized into "rank A," "rank B," "rank C", ···, not into "general manager," "section chief," "system manager," ···.

The ranks are discriminated from each other by, for example, rates. A user of higher rank can read (see) more contents and exercise a less restricted authority. The ranks are registered on a department basis.

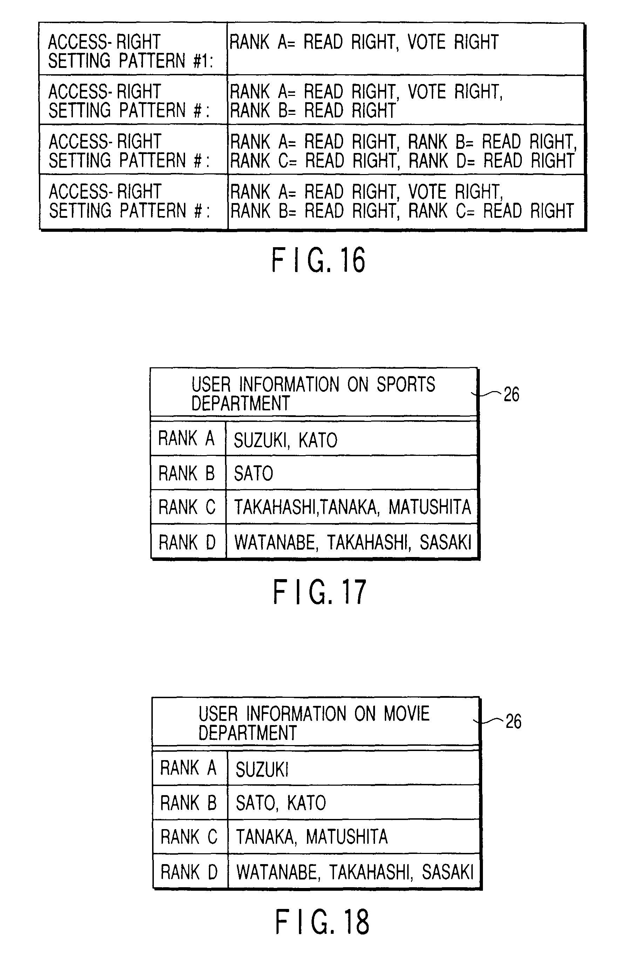

FIG. 16 shows an example of an access-right setting pattern group in the seventh embodiment.

As shown in FIG. 16, patterns that only the users of rank A are allowed to read and patterns that the users of rank A, rank B, rank C and rank D are allowed to read are prepared as access-right setting patterns. Access-rights include a right to only read, such as seeing movies or reading programs, and a right to vote by which votes for and against or opinions about the appreciated contents are allowed to be given. Here, "execute right" is set in the WWW server. The application side interprets the setting as "vote right," thereby realizing the vote right.

FIG. 17 shows an example of user information in the sports department.

FIG. 18 shows an example of user information in the movie department.

As described above, users are registered by rank on a department basis.

Next, the access-right setting system of the seventh embodiment constructed as described above will be explained.

When the user wants to receive content providing service, he or she applies for registration via the Internet. On the basis of the application information, the user registering section 103 asks the user information managing section 25 for user registration in the software content provider 101.

Since the user registration is carried out on a department basis, the user applying for registration has only to make a request for registration in the department related to the desired contents. For example, in FIGS. 17 and 18, "Kato" has registered in rank A in the sports department and in rank B in the movie department. Moreover, "Sasaki" has registered only in the movie department.

Using the access-right setting system, the access-right setter sets access-rights again in the content 28 at the service starting date in every month. This enables the users newly registered to access the content 28 in the range of their rights from the service starting date in that month.

When the access-right setting system of the fourth embodiment is used, there is no need to set access-rights again to the content 28 and the user 102 can access the content 28 at the time when the user has been registered in the user information 26.

The access-right setting system of the seventh embodiment produces similar effects to those of the first to sixth embodiment, even when the contents are provided for users outside the system.

While in the seventh embodiment, the access-right setting system has been applied to a software content provider, the present invention may be applied to similar various services.

### (Modifications)

The present invention is not limited to the above embodiments, and may be practiced or embodied in still other ways without departing from the spirit or essential character thereof. Hereinafter, modifications will be explained.

### [Modification 1]

In the above embodiments, a method of transmitting and receiving ACL, ACL patterns, and content information has not been written. The following transmitting and receiving methods can be considered. As long as the necessary information can be received and transmitted correctly, any approach may be used.
· A message communication between distributed objects is used which uses Java RMI or ORB (Object Request Broker) techniques complying with Java RMI or CORBA (Common Object Request Broker Architecture).
· A communication between processes which uses RPC (Remote Procedure Call) or Socket is used.
· General WWW mechanisms, such as HTTP (Hyper Text Transfer Protocol) or CGI (Common Gateway Interface), are used.
· An agent holds the necessary information and distributes it.

### [Modification 2]

While in the above embodiments, an ACL has been created by applying the user information to an access-right setting pattern, what is equivalent to an already completed ACL may be included as an access-right setting pattern. In this case, the ACL converting sections 22, 22' transmit the selected access-right setting pattern as an ACL to the ACL setting section 15.

### [Modification 3]

Abstract user names may be mixed with actual user names (or user-group names) in a single access-right setting pattern. In this case, only the abstract user names are converted on the basis of the user information. The parts of the actual user names are left as they are in the created ACL.

### [Modification 4]

Although "general manager" and "section chief" in a company have been used as abstract user names, there is no limit to abstract user names.

### [Modification 5]

In the above embodiments, the contents in the WWW server have been written as resources to which access-rights are to be set. As long as resources on a computer allow the setting of access-rights as files on a file system or data items on a database, there is no limit to resources to which access-rights are to be set.

### [Modification 6]

While in the above embodiments, the setting and managing department 2 for access-rights has been set independently, another department, for example, the A department 3 may also act as the setting and managing department 2.

### [Modification 7]

While in FIGS. 2 to 11, explanation has been given using two departments, the A department 3 and B department 4, there is no limit to the number of departments as shown in FIG. 1.

### [Modification 8]

A suitable combination of the first embodiment and the second or third embodiment or a suitable selection of one of the above embodiments makes it possible to determine whether the conversion of an access-right setting pattern into an ACL should be caused in the setting and managing department 2 or each of the departments 3, 4, ··· to which access-rights are to be set, depending on the design concept of the system or the load condition.

Storage mediums which can store programs and be read by a computer may be used in any suitable form for the present invention. The storage mediums include magnetic disks, floppy disks, hard disks, optical disks (e.g., CD-ROM, CD-R, or DVD), magneto-optical disks (e.g., MO), and semiconductor memories.

The OS (operating system) running on the computer under the control of the programs installed from a storage medium into the computer or the MW (middleware) including database management software and network software may execute part of each process for realizing the above embodiments.

The storage mediums of the present invention include not only storage mediums independent of the computer but also storage mediums into which the programs transmitted via a LAN or the Internet have been downloaded or which store such programs temporarily.

The number of storage mediums is not limited to one. The storage mediums of the present invention include a set of storage mediums which carries out the processes in the embodiments. That is, the storage medium may take a suitable configuration.

The computer system of the present invention may be composed of a single computer or of plural computers connected to each other through a network and execute each process in the embodiments under the control of the programs stored in a storage medium.

The computers in the present invention include not only personal computers but also arithmetic and logic units and microcomputers built in information processing devices. That is, they include apparatuses, instruments, and devices which can realize the function of the present invention by means of programs.

## Claims

1. An access-right setting system for setting right to access resources on a computer, characterized by comprising:
an access-right setting pattern storage section (24) for storing one or more types of access-right setting patterns in which at least an object to obtain permission to access said resources is written; and
a selecting section (21) for selecting any one of said access-right setting patterns to set said right to access.

2. An access-right setting system according to claim 1, characterized in that said access-right setting pattern storage section (24) stores access-right setting patterns in which said object to obtain the permission is written in abstract user name.

3. An access-right setting system according to claim 2, characterized in that said access-right setting pattern storage section (24) stores not only said object but also access-right setting patterns in which the contents of the right to access are written.

4. An access-right setting system according to claim 3, characterized by further comprising an access control list creating section (22) which creates an access control list used to set said right to access by adapting an actual user name correlated with an abstract user name to the abstract user name in the access-right setting pattern selected by said selecting section (21).

5. An access-right setting system according to claim 4, characterized by further comprising a user information storage section (26) for storing user information including one or more combinations of said actual user names.

6. An access-right setting system according to claim 5, characterized by further comprising an access control list setting section (15) which is provided on a computer that manages said resources directly and sets the access control list created by said access control list creating section (22) for the resources.

7. An access-right setting system according to claim 6, characterized by further comprising a resource information acquiring section (14) which is provided on a computer that directly manages resources to which said right to access is to be set and acquires resource belonging information to create said access control list, wherein
said selecting section (21) instructs said resource information acquiring section (14) to acquire said belonging information and specifies the resource from which the belonging information is to be acquired as an object to which said right to access is to be set.

8. An access-right setting system according to claim 7, characterized in that said selecting section (21) is provided on a computer different from the computer that manages said resources directly and the two computers exchanges information via a network.

9. An access-right setting system according to claim 7, characterized in that said access control list creating section (22) is provided on a computer different from the computer that manages said resources directly and the two computers exchanges information via a network.

10. An access-right setting system according to claim 7, characterized in that said access control list creating section (22) is provided on the computer that manages said resources directly.

11. An access-right setting system according to claim 7, characterized in that said user information storage section (26) is provided on a computer different from the computer that manages said resources directly and the two computers exchanges information via a network.

12. An access-right setting system according to claim 7, characterized in that said user information storage section (26) is provided on the computer that manages said resources directly.

13. An access-right setting system according to claim 3, characterized by further comprising an access control list creating section (22) which creates an access control list used to set said right to access by adapting a user-group name corresponding to an actual user name correlated with an abstract user name to the abstract user name in the access-right setting pattern selected by said selecting section (21).

14. An access-right setting system according to claim 13, characterized by further comprising a user information storage section (26) for storing user information including one or more combinations of said actual user names, the user information including said user-group name as the information determined by the combination group name and said abstract user name, and said user-group name remaining unchanged even when the contents of the combination of actual user names are changed.

15. An access-right setting system according to claim 14, characterized by further comprising an access control list setting section (15) which is provided on a computer that manages said resources directly and sets the access control list created by said access control list creating section (22) for the resources.

16. An access-right setting system according to claim 15, characterized by further comprising a resource information acquiring section (14) which is provided on a computer that directly manages resources to which said right to access is to be set and acquires resource belonging information to create said access control list, wherein
said selecting section (21) instructs said resource information acquiring section (15) to acquire said belonging information and specifies the resource from which the belonging information is to be acquired as an object to which said right to access is to be set.

17. An access-right setting system according to claim 16, characterized in that said selecting section (21) is provided on a computer different from the computer that manages said resources directly and the two computers exchanges information via a network.

18. An access-right setting system according to claim 16, characterized in that said access control list creating section (22) is provided on a computer different from the computer that manages said resources directly and the two computers exchanges information via a network.

19. An access-right setting system according to claim 16, characterized in that said access control list creating section (22) is provided on the computer that manages said resources directly.

20. An access-right setting system according to claim 16, characterized in that said user information storage section (26) is provided on a computer different from the computer that manages said resources directly and the two computers exchanges information via a network.

21. An access-right setting system according to claim 16, characterized in that said user information storage section (26) is provided on the computer that manages said resources directly.

22. A computer program stored on a computer-readable medium used to control an access-right setting system for setting right to access resources on a computer, the computer program characterized by comprising:
a code of access-right setting pattern managing means (23) for causing a storage unit to store one or more types of access-right setting patterns in which at least an object to obtain permission to access said resources is written; and
a code of selecting means (21) for causing the access-right setting pattern managing means (23) to select any one of said access-right setting patterns to set said right to access.

23. A computer program according to claim 22, characterized in that said access-right setting pattern managing means (23) causes a storage unit to store access-right setting patterns in which said object to obtain the permission is written in abstract user name.

24. A computer program according to claim 23, characterized in that said access-right setting pattern managing means (23) causes the storage unit to store not only said object but also access-right setting patterns in which the contents of the right to access are written.

25. A computer program according to claim 24, characterized by further comprising a code of access control list creating means (22) which creates an access control list used to set said right to access by adapting an actual user name correlated with an abstract user name to the abstract user name in the access-right setting pattern selected by said selecting section (21).

26. A computer program according to claim 25, characterized by further comprising a code of user information storage managing means (25) for causing a storage unit to store user information including one or more combinations of said actual user names.

27. A computer program according to claim 26, characterized by further comprising a code of access control list setting means (15) sets the access control list created by said access control list creating means (22) for the resources.

28. A computer program according to claim 27, characterized by further comprising a code of resource information acquiring means (14) acquires resource belonging information to create said access control list, wherein
said selecting section (21) instructs said resource information acquiring means (14) to acquire said belonging information and specifies the resource from which the belonging information is to be acquired as an object to which said right to access is to be set.

29. A computer program according to claim 24, characterized by further comprising a code of access control list creating means (22) which creates an access control list used to set said right to access by adapting a user-group name corresponding to an actual user name correlated with an abstract user name to the abstract user name in the access-right setting pattern selected by said selecting means (21).

30. A computer program according to claim 29, characterized by further comprising a code of user information managing means (25) for causing a storage unit to store user information including one or more combinations of said actual user names, the user information including said user-group name as the information determined by the combination group name and said abstract user name, and said user-group name remaining unchanged even when the contents of the combination of actual user names are changed.

31. A computer program according to claim 30, characterized by further comprising a code of access control list setting means (15) sets the access control list created by said access control list creating means (22) for the resources.

32. A computer program according to claim 31, characterized by further comprising a code of resource information acquiring means acquires resource belonging information to create said access control list, wherein
said selecting means (21) instructs said resource information acquiring means (14) to acquire said belonging information and specifies the resource from which the belonging information is to be acquired as an object to which said right to access is to be set.
